# EUROPÄISCHE PATENTSCHRIFT

(11) **EP 0 808 986 B1**
(45) Veröffentlichungstag und Bekanntmachung des Hinweises auf die Patenterteilung: **26.02.2003**
(21) Anmeldenummer: 97107895.1
(22) Anmeldetag: 15.05.1997
(51) Int. Cl.: E06B 9/88

(54) **Steuerung für Antriebe von Toren**
Drive control for doors
Dispositif de commande de portes

(30) Priorität: 22.05.1996 DE 19620502
(43) Veröffentlichungstag der Anmeldung: 26.11.1997
(73) Patentinhaber: Becker-Antriebe GmbH, 35764 Sinn (DE)
(72) Erfinder: Naumann, Bernd, 35075 Gladenbach (DE)
(74) Vertreter: Müller, Eckhard, Dr.

(56) Entgegenhaltungen:
- EP-A- 0 552 459
- EP-A- 0 698 955
- EP-A- 0 703 344
- DE-A- 3 834 643
- DE-A- 3 933 266
- DE-A- 4 020 395
- DE-A- 4 440 449
- FR-A- 2 717 016

## Beschreibung

Die Erfindung bezieht sich auf eine Steuervorrichtung für Antriebe von Toren nach dem Oberbegriff des Anspruchs 1.

Unter dem Begriff Tore werden im folgenden Sektionaltore, Rolltore, Garagentore, Feuerschutzbehänge, Rauchschutzbehänge oder andere Behänge, Jalousien und dergleichen aufziehbare und herablaßbare Elemente verstanden.

Bei den bisher eingesetzten Steuerungen für die Antriebe von Toren erfolgt die Erkennung der Endlagen, d.h. der Schließund öffnungsstellung des Tores, mechanisch über Endschalter. Nachteilig hierbei ist, daß die Einstellung der Endschalter sehr zeitaufwendig und z.T. recht ungenau ist. Ein weiteres Problem besteht darin, daß die Endschalter sich im Laufe der Zeit verstellen können. Insbesondere bei Sektionaltoren tritt aufgrund von Längungen der Seile, an welchen das Tor aufgehängt ist, eine Verstellung der Endlagen auf, so daß das Tor an der falschen Stelle abgeschaltet wird mit der Folge, daß das Tor dann nicht vollständig schließt oder öffnet.

Eine Steuerung für Antriebe von Toren der eingangs genannte Art ist bspw. aus der DE 44 40 449 A1 bekannt, bei der Mittel vorgesehen sind, die das Drehmoment des Antriebs während des Aufziehens oder Ablassens auf Null setzen können. Hierbei handelt es sich um eine sog. Stillstandssteuerung, die bei Ablauf des Tores auf ein Hindernis den gestiegenen Drehmomentbedarf des Motors erkennt und bei Überschreitung eines Grenzwertes diesen abschaltet. Bei dieser bekannten Steuerung wird das Drehmoment des Antriebsmotors laufend elektronisch erfaßt, was einen hohen apparativen Aufwand erfordert. Wurde in der Literaturstelle auch eine Drehzahlerfassung vorgesehen, so war sie stets eine zusätzlich zur Drehmomenterfassung vorgesehene, redundante Maßnahme.

Aus der EP-A-703 344, der DE 39 33 266 A und der DE 40 20 395 A sind weitere solche Stillstandssteuerungen bekannt.

Es wurden bereits Steuerungen vorgeschlagen (FR-A-2 717 016, DE 38 34 643 A), bei denen das Drehmoment des Antriebsmotors auch auf Zwischenwerte eingestellt wird. Das Drehmoment des Antriebsmotors ist dabei in Abhängigkeit von der Torstellung vorprogrammiert, so daß z.B. bei Leistungsrücknahme beim Start und gegen Ende der Bewegung sowohl ein sanfter Anlauf als auch ein sanftes Schließen erreicht werden. Eine solche weg- oder torstellungsabhängige Steuerung berücksichtigt jedoch weder unerwartet im Weg stehende Hindernisse noch den erhöhten Leistungsbedarf durch Schwergängigkeit irgendwelcher Komponenten.

Aus der EP-A-552 459 ist eine Sicherungsvorrichtung für Rolltore und dergleichen bekannt, die Mittel zur Veränderung des Drehmomentes des Antriebsmotors während des Ablaufes oder des Anhebens des Tores in Abhängigkeit vom Drehmomentbedarf des Tores auf eine Nullstellung hat. Diese Vorrichtung bildet den Oberbegriff des Anspruchs 1. Diese Steuerung vergleicht das Motordrehmoment mit einem für diese Stellung vorgespeicherten Wert, nicht mit dem aktuellen Bedarf. Zudem ist sie eine Stillstandssteuerung, die das Motormoment auf Null regelt und nicht auf größere oder kleinere Zwischenwerte.

Der Erfindung liegt demgegenüber die Aufgabe zugrunde, eine Steuerung für Torantriebe anzugeben, welche neben einer einfachen und präzisen Erkennung und Einstellung der Endlagen des Tores und einem sicheren Stopp an Hindernissen auch einen feinfühligen Betrieb ermöglicht, der durch Schonung der Bauteile zu einer längeren Lebensdauer führt.

Diese Aufgabe wird erfindungsgemäß gelöst von einer Steuervorrichtung mit den Merkmalen des Anspruchs 1. Vorteilhafte Ausführungen der Erfindung sind Gegenstände von Unteransprüchen.

Erfindungsgemäß wird von der Steuerung das Motordrehmoment dem momentanen Drehmomentbedarf in einem geschlossenen Regelkreis angepaßt. Wird nur ein niedrigeres Drehmoment benötigt, schaltet die Regelung auf ein kleineres; wird mehr Kraft benötigt, erhöht die Steuerung die Leistung. Damit ist eine Reduzierung oder Erhöhung des Motordrehmoments auf den gerade erforderlichen Wert erreicht. Die Regelung paßt das Drehmoment des Antriebsmotors möglichst genau der gerade erforderlichen Situation an. So kann das Motordrehmoment zurückgenommen werden, wenn die Torfeder ausreichendes Drehmoment aufbringt; es kann vollkommen, selbst bis auf einen Wert von Null zurückgenommen werden, wenn das Tor auf ein Hindernis trifft. Ebenso kann das Drehmoment erhöht werden, wenn dies erforderlich ist, z.B. um besonders schwergängige Tore zu bewegen.

Als Eingangsgröße für die Veränderung des Drehmoments des Antriebsmotors kann z.B. das auf das Tor wirkende Drehmoment oder das Drehmoment an der Antriebswelle des Motors verwendet werden. Dazu kann entweder das Drehmoment an diesen Wellen direkt gemessen werden, oder es wird indirekt, bspw. durch Messung von Drehzahlen und Umrechnung über ein Kennfeld, ermittelt.

In einer bevorzugten Ausführungsform wird nicht das Drehmoment , sondern die momentane Drehzahl des Tores oder des Antriebsmotors gemessen. Daraus läßt sich das Drehmoment berechnen. Diese Ausführung hat den Vorteil, daß billigere Meßgeräte, wie bspw. Inkrementalgeber an der Motorwelle oder an der Torwelle, verwendet werden können. Hierdurch entfällt der Aufwand, das Drehmoment im Motor oder an einer anderen Welle zu erfassen. Es wurde festgestellt, daß es völlig ausreicht, die Drehzahl der Motorwelle oder der Torantriebswelle zu erfassen. Aus diesem Meßwert kann auf den Drehmomentbedarf zurückgerechnet werden, wie weiter unten ausführlich beschrieben ist.

In einer bevorzugten Ausführung erfolgt die Ermittlung der Drehzahl des Antriebsmotors durch einen auf der Motorwelle angeordneten Inkrementalgeber. Diese Geräte sind in der Praxis weit verbreitet, daher preisgünstig und zuverlässig in der Funktion. Selbstverständlich wird der Regelbereich so weit ausgelegt, daß bei der Drehzahl Null des Tores oder des Antriebs, z.B. bei Auffahren des Tores auf ein Hindernis, der Motor und sein Drehmoment auch auf Null geschaltet werden. Diese Schaltung auf Null kann z.B. - neben dem Auffahren auf Hindernisse - als Endschalter eingesetzt werden. Fährt das Tor auf den Boden oder gegen den oberen Anschlag, so ist die Drehzahl der Torwelle - oder bei starrer Verbindung - der Motorwelle Null. Bei Erkennung dieses Signals wird das Drehmoment des Motors auf Null gesetzt. Dies erspart die Verwendung von Endschaltern. Bei der Montage und Justierung entfällt die Anordnung von Endschaltern. Das Tor muß lediglich einmal auf- und zugefahren werden, was sowieso bei der allgemeinen Funktionsprobe geschieht. Der Motor wird dann in diesen Lagen später zuverlässig aus- bzw. angeschaltet.

Bevorzugt speichert die elektronische Speicherung den Fahrweg des Tores mit oberer und unterer Endlage. Dieser Wert kann, muß im normalen Betrieb aber nicht benutzt werden.
Der Motor schaltet dann im oberen Bereich über den gespeicherten Wert (obere Endlage) ab. Im unteren Bereich schaltet der Motor entweder über die Sicherheitsleiste oder die auf der Null abfallende Drehzahl ab.

Die Mittel zur Einstellung des Drehmoments des Motors können beliebige Steuerungen sein. Am einfachsten ist es, bei Elektromotoren (z.B. bei Drehstromantrieben) eine oder mehrere Wicklungen abzuschalten. Ebenso einfach ist es möglich, eine Phase (z.B. bei Drehstromantrieben) abzuschalten, und so den Motor mit weniger Leistung (Drehmoment) zu betreiben. Bei Bedarf können die Schalter selbstverständlich wieder geschlossen werden und dem Motor wieder den erhöhten oder den maximalen Stromfluß zuführen.

Ebenso können andere elektrische oder elektronische Leistungsregelungen, insbesondere Phasenanschnittsteuerungen verwendet werden. Letztere haben sich heute bereits bei Dimmern für Helligkeitssteuerungen oder als Drehzahlregler für Handbohrmaschinen bewährt. Sie sind zuverlässig, leistungsfähig und preisgünstig.

In einer Ausführungsform sind Speicherelemente vorgesehen, welche unterschiedliche Drehzahl/Drehmomentkurven enthalten und es erlauben, den Motor auf eine Kurve mit niedrigerem Drehmoment zu schalten. Zusätzlich zu normalen Unterschienenabschaltungen kann die Steuerung das Tor stoppen wenn es in irgendeiner Weise mechanischen Beanspruchen ausgesetzt wird, die den Drehmomentbedarf unerwartet ansteigen lassen, wenn z.B. sich ein Hindernis im Torweg befindet. Zusätzlich lassen sich mit dieser Steuerung beliebige Zwischenlagen programmieren, z.B. Sommer- oder Winterstellungen des Tores. Das System überwacht außerdem die Federn des Tores. Das System erkennt die abfallende Federspannung der Federn; ermüdete Federn können so über einen Fehlercode signalisiert werden. Das natürliche Nachlassen der Federkraft wird während des Betriebes vom Antrieb der Steuerung erkannt und ausgeglichen. Ebenso wird die unvermeidliche Längung von Tragseilen selbsttätig korrigiert bzw. kompensiert, da das System nicht mehr mit starr befestigten Endschaltern, sondern der untere Referenzpunkt bzw. die untere Endlage immer wieder neu ermittelt wird.

Weitere Vorteile und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: eine schematische Darstellung eines Sektionaltors mit Antrieb im Querschnitt,
- Figur 2: die Prinzipschaltung für eine Drehmomentreduzierung eines Drehstrom-Asynchronantriebsmotores in Dreiecksschaltung,
- Figur 3: die Funktion des Drehmoments M in Abhängigkeit von der Drehzahl n des Drehstrom-Asynchronmotores in unterschiedlichen Schalterstellungen der Schaltung gemäß Figur 2 und
- Figur 4: ein Blockschaltbild des erfindungsgemäßen Steuerungssystems.

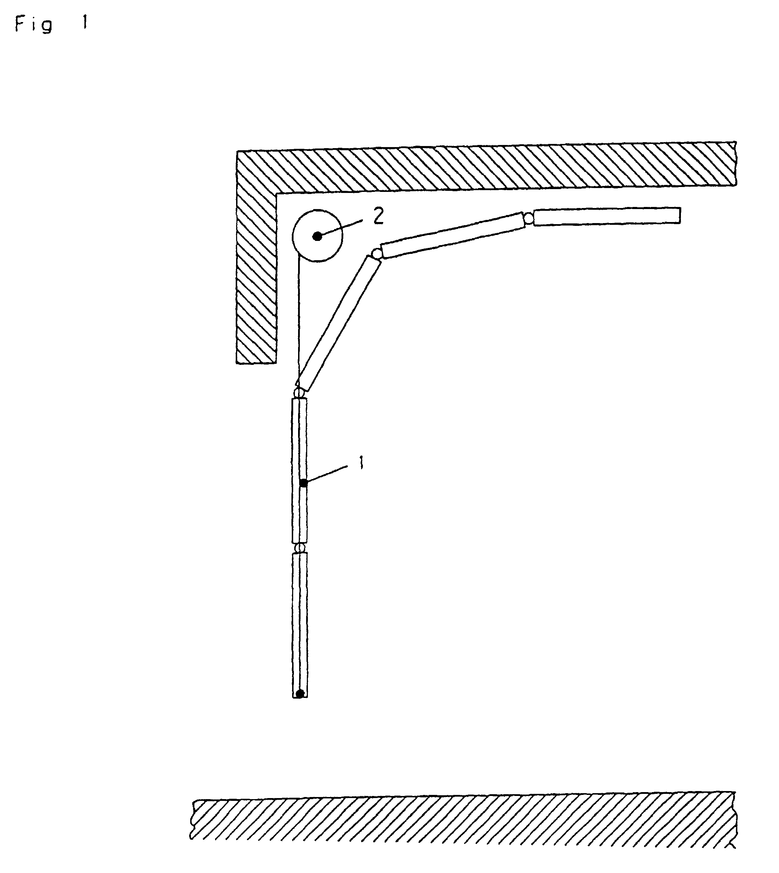

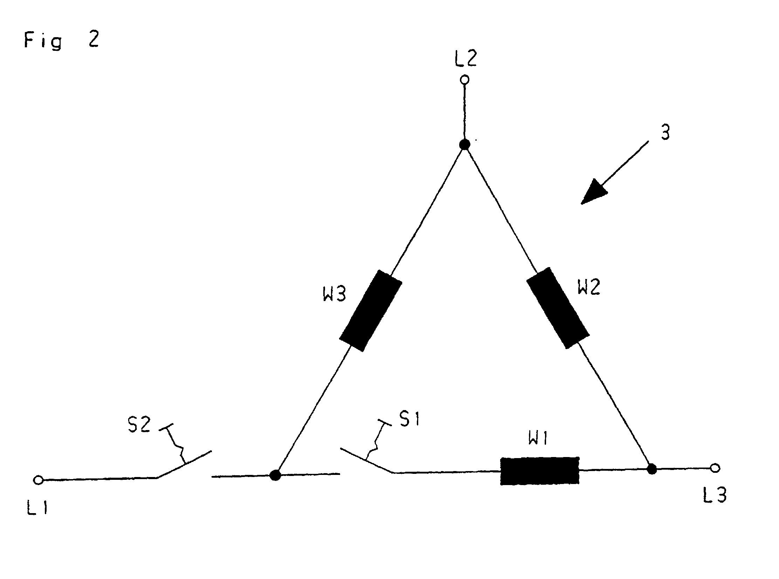

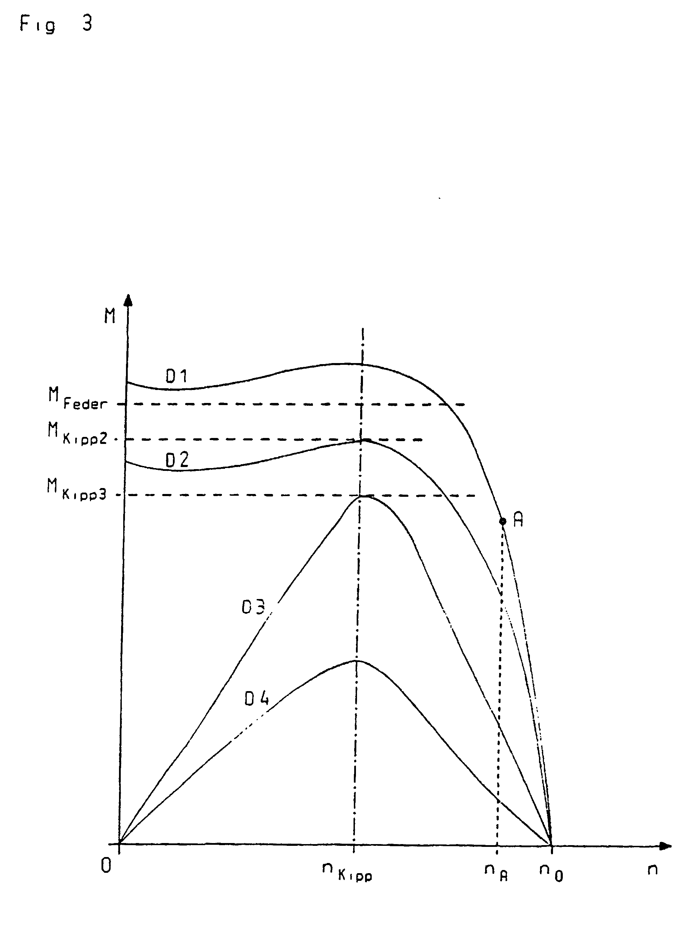

Figur 1 zeigt schematisch das Tor 1 an einem Antrieb, der oberhalb des Tores 1 angeordnet ist. Beim Öffnen und Schließen (in Pfeilrichtung) des Tores 1 unterstützt eine auf der Torwelle 2 angeordnete Torfeder den Antrieb und hält das Seil, an welchem das in der Figur 1 dargestellte Sektionaltor 1 angelenkt ist, unter Spannung. Die Torfeder und der Antriebsmotor 3 (vgl. Figur 2) befinden sich in einem Gehäuse oberhalb des Tores 1. Bei bekannten Torantrieben sind regelmäßig Endschalter vorgesehen. Wenn das Tor 1 in Schließstellung gelangt ist, wird ein Endschalter, der bspw. im Antrieb selbst angeordnet ist, bestätigt, wodurch der Antrieb ausgeschaltet wird. Ein solcher Schalter ist auch vorgesehen, wenn das Tor 1 die obere Endstellung erreicht hat. Problematisch bei den bekannten Steuerungen ist die Ungenauigkeit dieser Schalter, da sie sich mechanisch verstellen und eine Längung der Seile oder ähnliche Störfaktoren nicht kompensieren können. Wenn bei bekannten Torantrieben ein Sektionaltor 1 in Schließstellung gefahren wird, entfällt beim Aufsetzen des Tores 1 auf den Boden die durch das Eigengewicht des Tores 1 erzeugte Kraft zur Spannung der auf der Torwelle 2 angeordneten Torfeder. In diesem Zustand muß der Antriebsmotor 3, bspw. der Asynchronmotor, ein höheres Drehmoment aufbringen. Dies läßt sich z.B. dadurch verdeutlichen, daß man sich in Figur 3 auf der Drehmomentkurve D1 von der Drehzahl n₀ in Richtung n ₖᵢₚₚ bewegt. Wenn die vom Antriebsmotor 3 aufgebrachte Kraft bzw. das Drehmoment M größer ist als die von der Feder erzeugte Gegenkraft bzw. deren Moment M_{Feder}, läuft der Antrieb weiter und die Seile, mittels derer das Sektionaltor auf- und abgelassen wird, springen von der Seiltrommel ab oder das Seil wird schlaff.

Um dies zu vermeiden und gleichzeitig eine Endlage des Tores 1 zu ermitteln, ohne ortsfeste Endschalter einzusetzen, sieht die Erfindung vor, daß insbesondere während des Ablaufes des Tores 1 in Schließstellung eine ständige Drehmomentanpassung erfolgt, derart, daß das vom Antriebsmotor 3 abgegebene Drehmoment M bzw. das jeweilige Kippmoment M ₖᵢₚₚ der Drehmomentkennlinie (Di in Fig. 3) kleiner ist als das von der Feder aufgebrachte Drehmoment M_{Feder}, wenn das Tor 1 auf dem Boden aufsetzt. Erfolgte bei der bekannten Steuerung noch eine Abschaltung über Schalter oben und unten, so kann nun neben oder statt einer Abschaltung über eine Sicherheitsleiste in Schließstellung eine Abschaltung über die Blockierung des Tores 1 erfolgen. Die obere Abschaltung kann ebenso über die Blockierung des Tores 1 am oberen Anschlag in Schließstellung erfolgen und muß nicht mehr über eigene Endschalter gesteuert werden. Ebenso ist es auch möglich, die obere Abschaltung des Tores über die programmierte Endlage auszuführen, wie dies nachfolgend nach beschrieben wird.

Während des Laufes ist erfindungsgemäß eine ständige Anpassung des Drehmoments möglich, wie anhand der Figuren 2 und 3 weiter erläutert wird.

Figur 2 zeigt eine Schaltung zur Ansteuerung des Antriebsmotors 3, der hier ein Drehstrom-Asynchronmotor ausgeführt ist. Der Motor 3 ist als Drehstrommotor mit den drei Wicklungen W1, W2 und W3 ausgerüstet, die an die drei Phasen L1, L2 und L3 geschaltet sind. Erfindungsgemäß sind nun die Schalter S1 und S2 vorgesehen, wobei S1 die Wicklung W1 und S2 die Phase L1 abschalten kann.

Sind die beiden Schalter S1 und S2 geschlossen, ergibt sich ein normaler Motorbetrieb, d.h. die Drehmomentkurve D1 der Figur 3 mit maximalem Drehmoment. Ist z.B. Schalter S1 geöffnet, und damit die Wicklung W1 stillgelegt, der Schalter S2 jedoch geschlossen, so ergibt sich ein kleineres Drehmoment, das durch die Drehmomentkurve D2 der Figur 3 dargestellt wird. Ist z.B. der Schalter S2 geöffnet, während der Schalter S1 geschlossen ist, ergibt sich ein nochmals verringertes Gesamtdrehmoment, das die Kurve D3 der Figur 3 zeigt. Sind schließlich die beiden Schalter S1 und S2 geöffnet, d.h. die Wicklungen W1 und die Phase L1 vom Motor abgeschaltet, so ergibt sich ein minimales Drehmoment, was hier durch die Kurve D4 der Figur 3 dargestellt ist. Die erfindungsgemäße Drehmomentanpassung erfolgt bei dieser Ausführungsform also dadurch, daß die Schalter S1 und S2 die Phase L1, eine der Wicklungen W1, W2 oder W3, - hier im Ausführungsbeispiel der Figur 2 die Wicklung W1 - oder beides gleichzeitig stromlos schalten. Die Betätigung der Schalter S1 und S2, welche z.B. als sogenannte Triacs ausgeführt sind, erfolgt bevorzugt über eine Steuereinheit mit Rechner.

In Figur 3 ist der Kennlinienverlauf für die einzelnen Schaltungen gemäß Figur 2 dargestellt. Die Kurven Di zeigen jeweils das Drehmoment M über einer bestimmten Drehzahl n, wobei n_{O} die maximale Drehzahl, n_{A} eine im normalen Betrieb auftretende Drehzahl und nₖᵢₚₚ die Drehzahl ist, bei der die Drehmomentkurve ihren Maximalwert erreicht hat. Neben den Kurven Di für das Drehmoment des Antriebes ist mit M_{Feder} das Drehmoment der Feder eingezeichnet, mit M_{kipp 2} das Maximaldrehmoment der Drehmomentkurve D2 und mit M_{kipp 3} das Maximaldrehmoment der Drehmomentkurve D3. Der Drehmomentverlauf D1 entspricht dem Zustand, in welchem beide Schalter S1 und S2 gemäß Figur 2 geschlossen sind. Dies gibt den (normalen) Drehmomentverlauf des Antriebsmotors 3 gemäß dem Stand der Technik wieder. Mit A ist ein Arbeitspunkt gekennzeichnet, in welchem sich das Tor 1 in einem mittleren Öffnungs- oder Schließbereich bewegt. Die zugeordnete Drehzahl des Antriebsmotors 3 ist mit n_{A} bezeichnet. Dieses gegenüber dem Drehmoment M_{Feder} der Torfeder 2 geringere Drehmoment M des Antriebsmotors 3 reicht zur Bewegung des Tores 1 aus, da das Torblatt selbst infolge seines Eigengewichtes den Antrieb unterstützt und das restliche Drehmoment aufbringt. Wenn nun das Tor 1 auf dem Boden aufsetzt, fällt das unterstützende Drehmoment des Tores 1 weg, so daß der Antriebsmotor 3 ein größeres Drehmoment aufbringen muß. Der Arbeitspunkt A auf der Kennlinie D1 läuft nach oben und schneidet das durch die gestrichelte Gerade dargestellte Moment M_{Feder} der Feder 2. Da der Motor 3 sein maximales Kippmoment Mₖᵢₚₚ noch nicht erreicht hat, überdreht er die Feder 2, was zu oben beschriebener nachteiliger Seilschlaffung bzw. zu dem Herunterfallen des Seilzuges des Tores 1 führt.

Um zu vermeiden, daß das Drehmoment M des Motors 3 bei stillstehendem Tor 1, d.h. bei auf dem Fußboden oder einem Hindernis aufgesetztem Tor 1, größer wird als das von der Feder entgegengesetzte Moment M_{Feder}, werden nun erfindungsgemäß durch entsprechende Betätigungen der Schalter S1 und/oder S2 Wechsel von einer Drehmomentkurve - z.B. von D1 - auf andere, solche mit einem niedrigeren maximalen Kippmoment Mₖᵢₚₚ - z.B. auf D2 - durchgeführt.

Dieser Sachverhalt wird beispielhaft anhand Figur 3 dargestellt. Es sei angenommen, daß das Tor 1 sich in Schließrichtung bewegt und auf der Momentenkurve D1 den Arbeitspunkt A annimmt. Über einen Inkrementalgeber wird die Drehzahl n der Abtriebswelle des Motors 3 ermittelt, woraus der Rechner das zu dem Arbeitspunkt A zugehörige Drehmoment M kennt. Bspw. kann im Rechner zu der jeweiligen Drehzahl n das zugehörige Drehmoment M für die jeweiligen Kurven D1, D2, D3, D4 abgelegt sein. Wenn nun das Drehmoment M des Arbeitspunktes A kleiner ist als das maximale Kippmoment Mₖᵢₚₚ der Arbeitskurve mit dem nächsthöheren Index, erfolgt durch Umschalten der Schalter S1 und/oder S2 ein Übergang auf die Drehmomentkurve mit dem nächsthöheren Index (also auf eine der Kurven D2, D3 oder D4), bis gegebenenfalls sich der Arbeitspunkt A auf der Momentenkurve D4 befindet. Selbstverständlich kann der Arbeitspunkt A auch wieder auf die Momentenkurven D1, D2 oder D3 hin zu kleineren Kurvenindizes i geschaltet werden. Der Vorteil der erfindungsgemäßen Regelung ist, daß das maximale Kippmoment M _{Kipp} der Momentenkurve D4 so ausgelegt werden kann, daß es kleiner ist als das Drehmoment M_{Feder} der Feder. So wird vermieden, daß es beim Aufsetzen des Tores 1 auf dem Boden oder auf ein Hindernis zu einer Fehlfunktion des Antriebsmotores 3 im Sinn einer weiteren Spannung der Feder und einer damit verbundenen Lose im Seil für das Sektionaltor kommt.

Die erfindungsgemäße Steuerung reagiert also völlig selbsttätig auf Hindernisse, die unerwartet einem Herablassen des Tores 1 entgegenstehen. Ob dies ein Gabelstapler ist, der ins Tor gefahren ist, oder eine vergessene Palette, stets schaltet die Steuerung den Antrieb ab. Die erfindungsgemäße Steuerung gleicht auch die Tatsache aus, daß das von der Feder entgegengesetzte Moment M_{Feder} nicht konstant ist - wie in Figur 3 gezeigt - sondern sich unter verschiedenen Lastbedingungen ändert. Bei jeder Stellung des Tores 1 greift die erfindungsgemäße Schaltung automatisch ein. Wenn beim Auftreffen des Tores 1 auf den Boden bzw. beim Auftreffen auf ein Hindernis der Antriebsmotor 3 blockiert wird und in einem vorgegebenen Zeitintervall keine Impulse von dem die Drehzahl ermittelndem Inkrementalgeber kommen, wird die Spannungsversorgung für den Motor 3 abgeschaltet.

Der Inkrementalgeber befindet sich bevorzugt an der Motorwelle des Antriebsmotors 3 und kann bzw. als auf der Motorwelle angeordneter mehrpoliger Ringmagnet ausgebildet sein, welcher vor einem ortsfesten Sensor dreht.

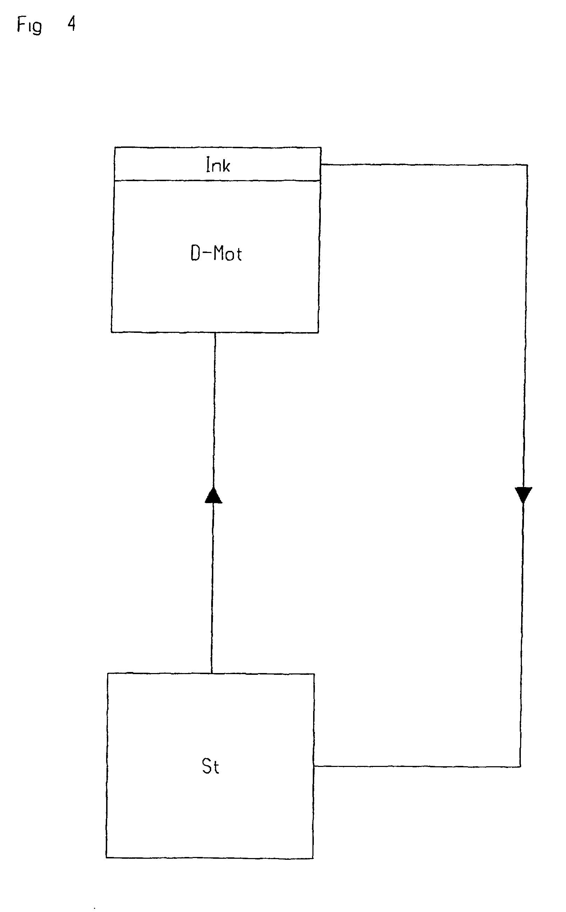

Figur 4 zeigt eine mögliche Ausführungsform einer erfindungsgemäßen Regelung. Als Blockschaltbild ist hier der Drehstrommotor D-Mot mit drei Phasen zu je 400 V gezeigt, auf dessen Welle ein Inkrementalgeber angeordnet ist, sowie eine Steuerung mit Mikroprozessor µC der die Impulse des Inkrementalgebers zugeleitet werden. Über diese Steuerung wird wiederum der Motor 3 angesteuert, z.B. wird sein Drehmoment in Abhängigkeit von seiner Drehzahl geregelt. Zu erkennen ist, daß erfindungsgemäß erstmals eine geschlossene Regelstrecke vorgesehen ist, bei der das Drehmoment seinem aktuellen Bedarf angepaßt wird und nicht nur irgendwelchen Voreinstellungen.

Für die Erkennung der Endlagen wird das Sektionaltor bzw. das Tor 1 zunächst von der oberen in die untere Endstellung gefahren, wobei die Anzahl der vom Inkrementalgeber gezeigten Impulse gezählt und abgespeichert wird. Dies ist ein Maß für die Höhe des jeweiligen Tores 1. Die untere Endlage des Tores 1 wird in dieser Ausführung als Referenzpunkt für die obere Endlage benutzt. Dieser Referenzpunkt wird ständig überprüft, indem z.B. das Signal einer Sicherheitsleiste am unteren Ende des Tores 1 oder eine Blockierung des Tores 1 selbst ausgenutzt wird, jedoch innerhalb der Grenzen eines vorgegebenen Bereiches bezogen auf den zuvor ermittelten Referenzpunkt. Es kann eine neue untere Endlage als Referenzpunkt angenommen werden, wenn eine Abschaltung über die Sicherheitleiste oder über eine Blockierung des Motors im Bereich von 5 cm über dem zuvor festgelegten Referenzpunkt erfolgt. Die obere Endlage ergibt sich wiederum aus der bei der Ersteinstellung ermittelten Anzahl der vom Inkrementalgeber aufgenommenen Impulse.

## Patentansprüche

1. Steuervorrichtung für Antriebe von Toren (1) oder dergleichen Behänge mit Mitteln zur Veränderung des Drehmomentes (M) des Antriebsmotors (3) während des Ablaufes oder des Anhebens des Tores (1) in Abhängigkeit vom Drehmomentbedarf des Tores (1) auf eine Nullstellung, **dadurch gekennzeichnet, dass** der aktuelle Drehmomentbedarf während der Bewegung ermittelt und das Drehmoment (M) diesem angepasst wird.

2. Steuervorrichtung nach Anspruch 1, **dadurch gekennzeichnet, dass** zur Ansteuerung des Drehmoments (M) des Antriebsmotors (3) das momentan auf das Tor (1) oder auf den Antriebsmotor (3) wirkende Drehmoment oder die Drehzahl der Torantriebswelle oder des Antriebsmotors (3) verwendet werden.

3. Steuervorrichtung nach Anspruch 2, **dadurch gekennzeichnet, dass** die Ermittlung der Drehzahl des Antriebsmotors (3) durch einen der Motorwelle zugeordneten Inkrementalgeber erfolgt.

4. Steuervorrichtung nach einem der Ansprüche 2 oder 3, **dadurch gekennzeichnet, dass** das Drehmoment (M) des Antriebsmotors (3) bei einer Drehzahl von Null auf Null gesetzt wird.

5. Steuervorrichtung nach einem der vorhergehenden Ansprüche, **dadurch gekennzeichnet, dass** als Mittel zur Veränderung des Drehmoments (M) Schalter (S1 S2) vorgesehen sind, die eine oder mehrere Phasen (L1, L2, L3) oder eine oder mehrere Wicklungen (W1, W2, W3) des Antriebsmotors (3) an- oder abschalten.

6. Steuervorrichtung nach einem der vorhergehenden Ansprüche, **gekennzeichnet durch** eine elektronische Leistungsregelung, insbesondere eine Phasenanschnittsteuerung zur Veränderung des Drehmoments (M) des Antriebsmotors (3).

7. Steuervorrichtung nach einem der vorhergehenden Ansprüche, **dadurch gekennzeichnet, dass** ein Speicherelement vorgesehen ist, welches unterschiedliche Drehmoment-Drehzahl-Kennlinien (Dₙ) enthält.

8. Steuervorrichtung nach Anspruch 7, **dadurch gekennzeichnet, dass** mehrere anfahrbare Zwischenstellungen des Tores einspeicherbar sind.

## Claims

1. Control device for drives of doors (1) or like hangings with means for changing the torque (M) of the drive motor (3) during the running or the raising of the door (1) in dependence on the torque requirement of the door (1) at a zero setting, **characterised in that** the actual torque requirement during the movement is determined and the torque (M) is adapted thereto.

2. Control device according to claim 1, **characterised in that** for control of the torque (M) of the drive motor (3) the torque instantaneously acting on the door (1) or on the drive motor (3) or the rotational speed of the door drive shaft or of the drive motor (3) is used.

3. Control device according to claim 2, **characterised in that** the determination of the rotational speed of the drive motor (3) is carried out by an incremental transmitter associated with the motor shaft.

4. Control device according to one of claims 2 and 3, **characterised in that** the torque (M) of the drive motor (3) is set to zero at a rotational speed of zero.

5. Control device according to one of the preceding claims, **characterised in that** switches (S1, S2) are provided as means for varying the torque (M) and switch on or switch off one or more phases (L1, L2, L3) or one or more windings (W1, W2, W3) of the drive motor (3).

6. Control device according to one of the preceding claims, **characterised by** an electronic power regulation, particularly a phase control for varying the torque (M) of the drive motor (3).

7. Control device according to one of the preceding claims, **characterised in that** a storage element is provided, which contains different torque/rotational-speed characteristic curves (Dₙ).

8. Control device according to claim 7, **characterised in that** several intermediate settings, which can be driven to, of the door can be stored.

## Revendications

1. Dispositif de commande pour l'entraînement de portes (1) ou de rideaux suspendus analogues, comportant des moyens pour modifier le couple (M) du moteur d'entraînement (3) pendant l'abaissement ou le soulèvement de la porte (1) en fonction du besoin de couple pour la porte (1) jusqu'à une position zéro, **caractérisé en ce que** le besoin réel de couple pendant le déplacement est déterminé et le couple (M) est adapté à ce besoin.

2. Dispositif de commande selon la revendication 1, **caractérisé en ce que** pour la commande du couple (M) du moteur d'entraînement (3), on utilise le couple, qui agit instantanément sur la porte (1) ou sur le moteur d'entraînement (2), ou la vitesse de rotation de l'arbre d'entraînement de la porte ou du moteur d'entraînement (3).

3. Dispositif de commande selon la revendication 2, **caractérisé en ce que** la détermination de la vitesse de rotation du moteur d'entraînement (3) est réalisée au moyen d'un transmetteur incrémental associé à l'arbre du moteur.

4. Dispositif de commande selon l'une des revendications 2 ou 3, **caractérisé en ce que** le couple (M) du moteur d'entraînement (3) est réglé pour une vitesse de rotation de zéro à zéro.

5. Dispositif de commande selon l'une des revendications précédentes, **caractérisé en ce qu'**il est prévu comme moyens pour modifier le couple (M), des interrupteurs (S1, S2), qui connectent ou déconnectent une ou plusieurs phases (L1, L2, L3) ou un ou plusieurs enroulements (W1, W2, W3) du moteur d'entraînement (3).

6. Dispositif de commande selon l'une des revendications précédentes, **caractérisé par** une unité de régulation électronique de la puissance, notamment une unité de commande à découpage de phase, pour modifier le couple (M) du moteur d'entraînement (3).

7. Dispositif de commande selon l'une des revendications précédentes, **caractérisé en ce qu'**il est prévu un élément de mémoire, qui contient différentes courbes caractéristiques couple-vitesse de rotation (Dₙ).

8. Dispositif de commande selon la revendication 7, **caractérisé en ce que** l'on peut mémoriser plusieurs positions intermédiaires de la porte, qui peuvent être atteintes.
